Europäisches Patentamt

European Patent Office

Office européen des brevets

(11) Veröffentlichungsnummer: **0 352 232**
**A1**

(12) **EUROPÄISCHE PATENTANMELDUNG**

(21) Anmeldenummer: **89810551.5**

(22) Anmeldetag: **20.07.89**

(51) Int. Cl.⁵: **E 04 D 13/08**
**F 16 L 3/12**

(30) Priorität: **22.07.88 CH 2813/88**

(43) Veröffentlichungstag der Anmeldung:
**24.01.90 Patentblatt 90/04**

(84) Benannte Vertragsstaaten:
**AT CH DE FR IT LI NL SE**

(71) Anmelder: **STRUB AG**
**Bürenstrasse 30**
**CH-3250 Lyss (CH)**

(72) Erfinder: **Mischler, Hans-Rudolf**
**Leuernweg 41**
**CH-3250 Lyss (CH)**

**Wyplosz, Josef**
**Tulpenweg 2**
**CH-3250 Lyss (CH)**

**Röthlisberger, Toni**
**Grünemattstrasse 6**
**CH-2552 Orpund (CH)**

(74) Vertreter: **Keller, René, Dr. et al**
**Patentanwälte Dr. René Keller & Partner Postfach 12**
**Marktgasse 31**
**CH-3000 Bern 7 (CH)**

(54) **Rohrhalter für Ablaufrohre.**

(57) Der Rohrhalter **(1)** für Ablaufrohre **(4)** besteht aus einem rohrförmigen Verbindungsstück **(3)** zur Verbindung zweier Ablaufrohre **(4)** und einer mit Hilfe eines Bajonettverschlusses lösbar mit dem Verbindungsstück **(3)** verbindbaren Befestigungsschraube **(7)**.

Der Rohrhalter **(1)** hält und verbindet die Ablaufrohre **(4)**, wodurch die Montage, Reparatur und der Ersatz von Ablaufrohren **(4)** so einfach wird, daß sie auch von Nichtfachleuten jederzeit ausführbar ist.

Fig. 2

EP 0 352 232 A1

**Beschreibung**

## Rohrhalter für Ablaufrohre

Die Erfindung betrifft einen Rohrhalter für Ablaufrohre gemäß dem Oberbegriff des Patentanspruchs 1, ein Ablaufrohr zur Verwendung mit dem Rohrhalter, gemäß dem Oberbegriff des Patentanspruchs 10 und ein Werkzeug zur Montage des Rohrhalters gemäß dem Oberbegriff des Patentanspruchs 11.

Rohrhalter dieser Art dienen insbesondere zur Halterung und Verbindung von Ablaufrohren für Regenwasser aus Dachrinnen und werden dazu an der Gebäudeaußenwand befestigt.

Ein Rohrhalter dieser Art ist aus der GB-PS 704 684 bekannt. Der bekannte Rohrhalter ist ein einstückig gegossener Teil mit einem Fußteil zur Befestigung an der Wand und einem zylindrischen Teil, in den die Ablaufrohre gesteckt werden. Der Fußteil ist als Lasche mit je einem Loch an seinen Enden symmetrisch zur Längsachse des zylindrischen Teils ausgebildet. Der zylindrische Teil ist als zylindrisches Rohrstück ausgebildet von dessen Innenwandmitte ein zur Rohrachse rotationssymmetrisch angeordneter Einsatz zu einem der Enden unter Verringerung seines Innendurchmessers derart verläuft, daß ein sich zur Innenwandmitte hin verjüngender Einstich zwischen ihm und der Zylinderwand entsteht. Der Rohrhalter wird mit Schrauben durch die Löcher seiner Laschen an der Gebäudewand befestigt. Ein oberes Ablaufrohr, welches mit einem unteren verbunden werden soll, wird mit seinem unteren Ende von oben in den Rohrhalter gesteckt und steht dann auf dem Einsatz. Das untere Ablaufrohr wird mit seinem oberen Ende von unten in den Rohrhalter geschoben, wobei sein oberes Ende dann im Einstich liegt.

Nachteilig bei dem bekannten Rohrhalter ist seine aufwendige Konstruktion und sein relativ großes Gewicht.

Aufgabe der Erfindung ist es, einen ästhetisch ansprechenden Rohrhalter einfacher Konstruktion von geringem Gewicht zu schaffen, der eine einfache und rasche, auch vom Nicht-Fachmann, leicht ausführbare Montage, Reparatur und Ersatz von Ablaufrohren gestattet.

Die erfindungsgemäße Lösung der Aufgabe ist hinsichtlich des Rohrhalters durch die im Anspruch 1, hinsichtlich des Ablaufrohrs zur Verwendung mit dem Rohrhalter durch die im Anspruch 10 und hinsichtlich des Werkzeugs zur Montage des Rohrhalters durch die im Anspruch 11 angegebenen Merkmale gekennzeichnet.

Gegenstand der Ansprüche 2 bis 9 sind bevorzugte Ausführungsformen des erfindungsgemäßen Rohrhalters.

Die Ansprüche 5 bis 7 lösen zusätzlich die Aufgabe, einen Rohrhalter zu schaffen, der ein gesichertes Anhängen eines Ablaufrohrs gewährleistet, damit unterhalb dieses Ablaufrohrs ein weiterer Rohrhalter auf einfache Art und Weise montiert werden kann.

Im folgenden wird die Erfindung anhand der nur einen Ausführungsweg darstellenden, beiliegenden Zeichnung näher erläutert. Es zeigen:

Fig. 1 eine in eine Wand eingesetzte Befestigungsschraube, die ein Verbindungsstück trägt, und eine weitere Befestigungsschraube für ein weiteres Verbindungsstück,

Fig. 2 zwei an einer Wand montierte Rohrhalter mit eingesetztem Ablaufrohr,

Fig. 3 einen Schnitt durch das Verbindungsstück eines Rohrhalters mit einem oberen und einem unteren Ablaufrohr,

Fig. 4 eine Draufsicht auf eine als Teil eines Bajonettverschlußes ausgebildete Hülse am oberen Teil des Verbindungsstücks in Blickrichtung IV in Fig. 3,

Fig. 5 eine Seitenansicht eines Spezialwerkzeugs zum Einschrauben der Befestigungsschraube,

Fig. 6 eine Ansicht von unten auf das Spezialwerkzeug in Blickrichtung VI in Fig. 5,

Fig. 7 ein in ein Sockelrohr eingesetztes Ablaufrohr,

Fig. 8 eine Ansicht einer Variante eines Rohrhalters mit eingelegtem unteren Ablaufrohr mit Blick vom unteren Ablaufrohr gegen den Rohrhalter und

Fig. 9 eine Draufsicht auf den unteren Teil der Variante des Rohrhalters in Figur 8.

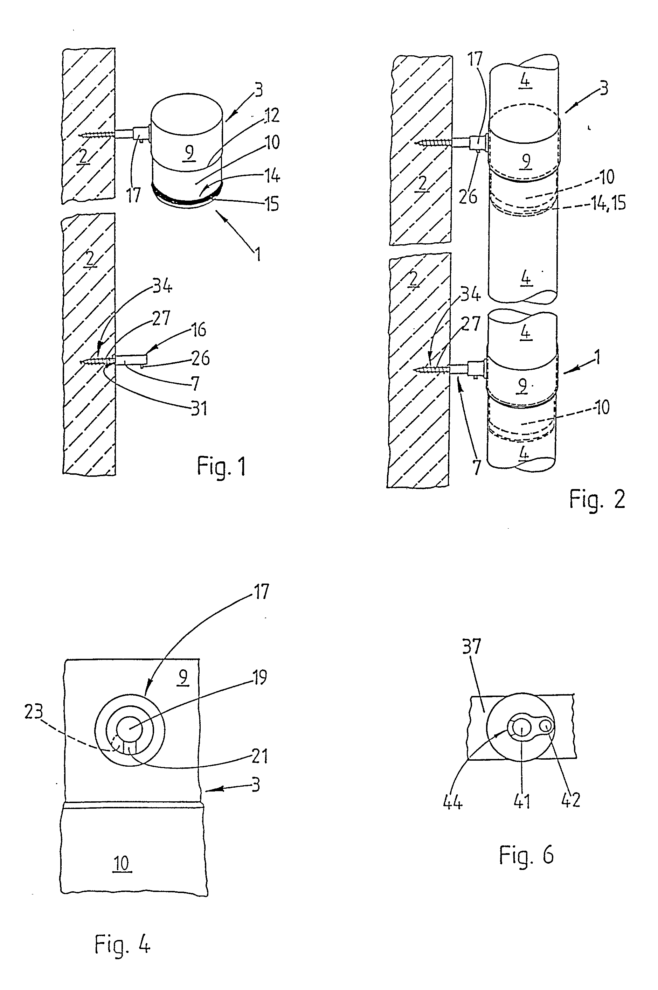

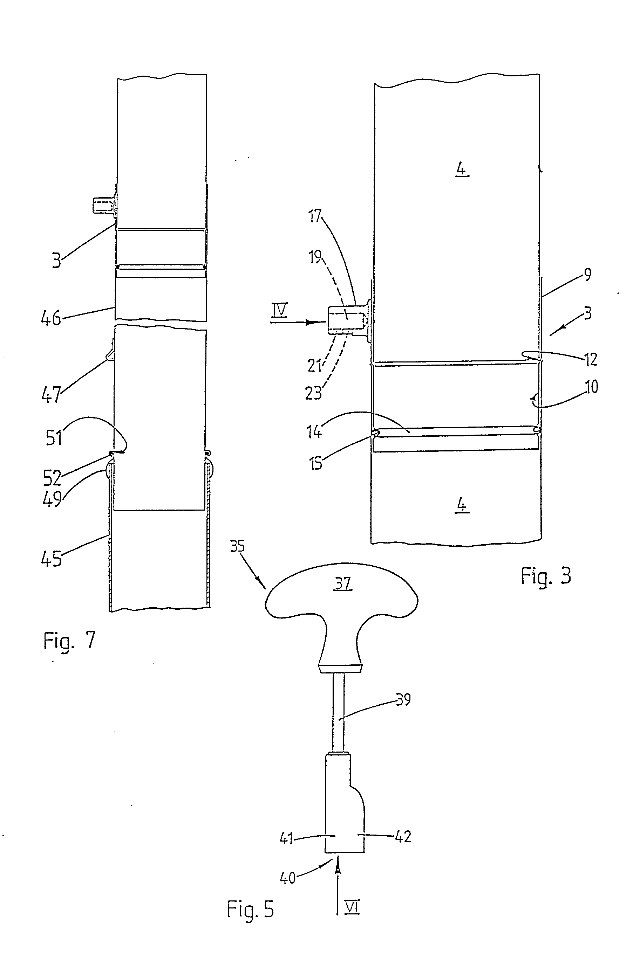

Der in den Figuren 1 und 2 dargestellte Rohrhalter 1 ist an einer Gebäudewand 2 montiert. Er hat ein Verbindungsstück 3 zum Verbinden von zwei Ablaufrohren 4, wie in den **Figuren 2 und 3** gezeigt, und eine Befestigungsschraube 7 als Befestigungsorgan.

Das Verbindungsstück 3 ist als abgestuftes zylindrisches Rohrstück, dessen oberer Teil 9 gegenüber dem unteren Teil 10 aufgeweitet ist, aus Blech gefertigt. Da der Innendurchmesser des oberen Teils 9 größer ist als der des unteren Teils 10, ergibt sich zwischen beiden ein Absatz 12 als Auflage für die Unterkante des Ablaufrohrs 4, wie in **Figur 2** gezeigt.

In den unteren Teil 10 ist in der Nähe seines unteren Endes eine ringförmige Nut 14 eingedrückt, in der ein elastischer Ring 15 liegt, dessen Dicke geringfügig größer als die Tiefe der Nut 14 ist. Neben der Aufnahme des Ringes 15 dient die Nut 14 zur Versteifung des unteren Teils 10.

Annähernd auf der Mitte der Außenwandung des oberen Teils 9 ist eine metallische Hülse 17 angebracht. Die Achse der Bohrung 19 der Hülse 17 zeigt radial zur Zylinderachse des Verbindungsstücks 3 nach außen. Die Bohrung 19 hat einen inneren Durchmesser, der um eine Toleranz größer bemessen ist als der dem Schraubengewinde 27 abgewandte Endteil 16 der Befestigungsschraube 7, damit dieser, wie unten beschrieben, in die Bohrung 19 einsteckbar ist. Die Wandung der Hülse 17 wird, wie in **Figur 4** erkennbar, von einem Schlitz 21 durchbrochen, der vom freien Hülsenende bis annähernd in die Mitte der Hülsenlänge verläuft, so daß die Bohrung 19 durch den Schlitz 21 nach unten offen ist. An das Ende dieses Schlitzes 21 in der Mitte der Hülse 17 schließt sich ein weiterer den Hülsenmantel durchtrennender Schlitz 23 an, der senkrecht zum Schlitz 21 verläuft und sich etwa um einen Winkel von neunzig Grad in Umfangsrichtung der Hülse 17 erstreckt. Die Breite beider Schlitze 21 und 23 ist so groß gewählt, daß ein weiter unten beschriebener Stift 26 hierin bewegt werden kann.

Der Endteil 16 der Befestigungsschraube 7 ist zylindrisch und trägt einige Millimeter von seinem freien Ende entfernt einen radial vorstehenden Stift 26. Der andere, konische Endteil trägt das Schraubengewinde 27. Der Stift 26 überragt die Mantelfläche der Befestigungsschraube 7 etwa um deren Durchmesser. Bei annähernd zwei Dritteln der Länge der Befestigungsschraube 7, gemessen von der konischen Schraubenspitze aus, ist eine Kerbe 31 als Markierung für die Einbautiefe vorhanden.

Die Hülse 17 und der Endteil 16 der Befestigungsschraube 7 dienen als Kupplungsteile einer lösbaren Verbindung zwischen der in der Gebäudewand 2 eingeschraubten Befestigungsschraube 7 und dem Verbindungsstück 3. Durch die Ausbildung des Stifts 26 am Endteil 16 und die beiden Schlitze 21 und 23 der Hülse 17 wirken die Kupplungsteile als Bajonettverschluß.

Für den Ablaufrohrzug werden zylindrische Ablaufrohre 4 gleichen Durchmessers verwendet. Die Montage der Ablaufrohre 4 an der Gebäudewand 2 beginnt, indem die Mitte der senkrechten Projektion der Unterkante eines nicht dargestellten Rinnen- oder Schrägstutzens, bzw. eines Stutzen eines Rinnenkastens auf die Gebäudewand 2 markiert und am Ort der Markierung ein Loch 34 in die Wand 2 gebohrt wird, in das ein (nicht dargestellter) Dübel eingesetzt wird. Die Montage wird von oben nach unten durchgeführt.

Zum Einschrauben der Befestigungsschraube 7 in das Dübelloch 34 wird ein in Figur 5 dargestelltes Spezialwerkzeug 35 mit einem T-förmigen Griff 37, bevorzugt aus Kunststoff, verwendet, der auf einem Schaft 39 sitzt. Am dem Griff 37 abgewandten Ende des Schafts 37 ist ein Kopf 40 befestigt, der am dem Schaft 37 abgewandten Ende zwei Bohrungen (Sacklöcher) 41 und 42 aufweist. Die Achse der einen Bohrung 41 fluchtet mit dem Schaft 39 und die Achse der anderen Bohrung 42 verläuft parallel zur Achse der Bohrung 41 unterhalb des waagrechten Teils des T-förmigen Griffs 37. Der Durchmesser der Bohrung 41 ist um eine Toleranz größer als der Durchmesser des Endteils 16 der Befestigungsschraube 7. An der der Bohrung 42 gegenüberliegenden Außenseite des Kopfes 40 verläuft ein Schlitz 44 parallel zur Achsenrichtung, durch den die Bohrung 41 seitlich nach außen offen ist. Die Schlitzbreite ist um eine Toleranz größer als die Dicke des Stifts 26 und die Schlitzlänge ist ungefähr doppelt so groß wie der Abstand des Stifts 26 vom Ende 16 der Befestigungsschraube 7. Der Innendurchmesser der Bohrung 42 ist um eine Toleranz größer als der Durchmesser des Stifts 26. Das Spezialwerkzeug 35 ist bis auf den Griff 37 aus Werkzeugstahl hergestellt.

Die Befestigungsschraube 7 wird mit ihrem Endteil 16 so in die Bohrung 41 des Spezialwerkzeugs 35 gesteckt, daß der Stift 26 im Schlitz 44 liegt. Die Befestigungsschraube 7 wird durch Drehen des T-förmigen Griffs 37 mit dem Spezialwerkzeug 35 in das Dübelloch 34 bis zu ihrer Kerbe 31 so eingeschraubt, daß der Stift 26 senkrecht nach unten zeigt. Das Verbindungsstück 3 wird nun von unten über den Rinnen- oder Schrägstutzen, bzw. den Stutzen des Rinnenkastens geschoben und die Hülse 17 am Verbindungsstück 3 über den Endteil 16 der in der Wand 2 steckenden Befestigungsschraube 7 bis zum Anschlag des Stifts 26 am Ende des Schlitzes 21 gesteckt. Der Stift 26 schaut über die Seitenwandung der Hülse 17 heraus. Das Spezialwerkzeug 35 wird mit der Bohrung 42 auf den Stift 26 gesteckt und dieser bis zum Anschlag am Ende des Schlitzes 23 verdreht. Der Stift 26 ist nun in der Hülse 17 nach Art eines Bajonettverschlusses verriegelt, und damit ist auch das Verbindungsstück 3 über die Befestigungsschraube 7 fest (jedoch zu Reparaturzwecken mit dem Spezialwerkzeug 35 wieder lösbar) mit der Wand 2 verbunden.

Eines der Ablaufrohre 4 wird nun von unten über den unteren Teil 10 des Verbindungsstücks 3 geschoben. Durch den elastischen Ring 15 ist das Ablaufrohr 4 während der weiteren Montage am Verbindungsstück 3 festgeklemmt, ohne daß die Gefahr des Herunterfallens besteht. Als nächstes wird in ein weiteres mittig auf der Höhe der Unterkante des Rohres 4 in die Gebäudewand 2 gebohrtes Loch 34 eine weitere Befestigungsschraube 7 geschraubt und wie oben beschrieben, weiter verfahren, bis ein letztes Ablaufrohr 46 mit gleichem Durchmesser wie die anderen Ablaufrohre 4 zum Einsatz in ein Sockelrohr 45, wie in **Figur 7** dargestellt, montiert wird.

Dieses letzte Rohr 46 hat, wie in **Figur 7** dargestellt, eine Haltenase 47, die verhindert, daß das Rohr 46 in das Sockelrohr 45 während der Montage oder auch später (falls es aus Unfug mutwillig mit Gewalt gegen die Klemmwirkung des Rings 15 nach unten gezogen werden sollte) hineinfällt.

Bei der Montage wird ein Übergangsstück 49 auf das Rohr 46 geschoben. Das Übergangsstück 49 ist ein schmaler Ring, dessen Durchmesser am oberen Ende um eine Toleranz größer ist als der Außendurchmesser des Rohrs 46, und an dessen Innenseite eine Nut 51 vorhanden ist, in die ein elastischer Ring 52 eingelegt ist. Der Durchmesser am unteren Ende des Rings 52 ist derart nach außen aufgeweitet, daß er auf den oberen Rand des Sockelrohrs 45 aufsetzbar ist. Die Tiefe der Nut 51 und die Dicke des elastischen Rings 52 sind derart aufeinander abgestimmt, daß das Übergangsstück 49 klemmend entlang des Rohres 46 verschiebbar ist. Zusammen mit dem Übergangsstück 49 wird das Rohr 46 leicht schräg am untersten Rohrhalter 1 vorbei in das Sockelrohr 45 gesteckt, anschließend von unten her über den unteren Teil 10 des Rohrhalters 1 und das Übergangsstück 49 nach unten gegen den oberen Rand des Sockelrohres 45 geschoben. Das unterste Rohr 46 ist montiert und wird im montierten Zustand durch den elastischen Ring 15 in der Nut 14 des unteren Teils 10 und durch den elastischen Ring 52 in der Nut 51 des Übergangsstücks 49 gehalten.

Anstelle des ringförmigen Übergangsstücks 49

kann auch ein ringförmiges und geschlitztes Übergangsstück verwendet werden, das mit einem Spannband gegen das unterste, letzte Rohr **46** geklemmt wird.

Die Hülse **17** wird bevorzugt in der Mitte des oberen Teils **9** des Verbindungsstücks **3** angebracht, um einerseits eine ausreichende Montagetoleranz zu haben und andererseits Bewegungsraum für die sich thermisch verändernde Länge des Ablaufrohrs **4** bereitzustellen.

Die Hülse **17** kann am Verbindungsstück **3** aufgelötet oder z. B. flüssigkeitsdicht in eine Öffnung in der Wandung des Verbindungsstücks **3** eingelötet, eingeklebt oder eingepreßt sein. Die Hülse **17** hat, wie in den Zeichnungen dargestellt, einen Boden, sie kann aber auch als Hülse ohne Boden ausgebildet sein, wenn sie auf die Wandung aufgelötet wird. Bevorzugt wird als Hülsenmaterial ein nicht oder nur schwer korrodierbares Metall verwendet; wird jedoch eingepreßt, kann auch ein witterungsbeständiger Kunststoff verwendet werden.

Die Ablaufrohre **4** werden mittels der erfindungsgemäßen Rohrhalter **1** bevorzugt senkrecht nach unten verlegt. Es ist jedoch auch eine schräge Montage ohne weiteres möglich.

Anstelle des Spezialwerkzeugs **35** zum Einschrauben der Befestigungsschraube **7** kann z. B. auch eine Kombizange oder ein Schraubenschlüssel mit verstellbarer Maulweite, ein sog. Engländer oder Franzose, verwendet werden, wobei das Spezialwerkzeug **35** aber den Vorteil einer besonders einfachen Handhabung hat und jegliche Beschädigung des den Stift **26** tragenden Endteils **16** vermeidet.

Das Verbindungsstück **3**, die hiermit verbundenen Ablaufrohre **4** und das Übergangsstück **49** sind zylindrisch. Sie können jedoch ohne die allgemeine Funktionstüchtigkeit zu verletzen, alle auch mit quaderförmigen, quadratischen, dreieckigen oder sonstigem Querschnitt ausgeführt sein. Sind die Ecken nicht allzu scharf geformt, kann zur Klemmung weiterhin ein elastischer Ring verwendet werden. Bei scharfkantigen Ecken empfiehlt es sich allerdings an den Seitenflächen einige separate elastische Anpreßpunkte zu wählen.

Das Befestigungsorgan **7** kann statt des Schraubengewindes **27** auch lediglich eine Spitze, Steindolle, o. dgl. aufweisen und mit einem Hammer in die Wand geschlagen werden.

Anstelle des Bajonettverschlusses können auch andere Arten der Verbindung gewählt werden. Es kann z. B. das Endteil **16** der Befestigungsschraube **7** anstelle des Stifts **26** und die Hülse **17** anstelle der beiden Schlitze **21** und **23** senkrecht zur Achse der Befestigungsschraube **7** je eine miteinander fluchtende Bohrung haben, durch die ein Splint oder eine Schraube gesteckt und anschließend gesichert wird. Anstelle der Bohrungen können Befestigungsschraube **7** und Hülse **17** auch eine Rastvorrichtung tragen. Diese beiden Verbindungsarten können bevorzugt eingesetzt werden, wenn anstelle der Befestigungsschrauben **7** Spitzen, Steindollen o. dgl. verwendet werden.

Anstelle des Absatzes **12** als Auflage kann auch ein innerer Wulst, eingesteckte Nieten, Schrauben o. ä. verwendet werden. Der Absatz **12** bietet jedoch den Vorteil die Strömung im Ablaufrohr **4** so gut wie nicht zu beeinflussen und auch keine Ansatzpunkte zur Ablagerung von Schmutz bereit zu stellen.

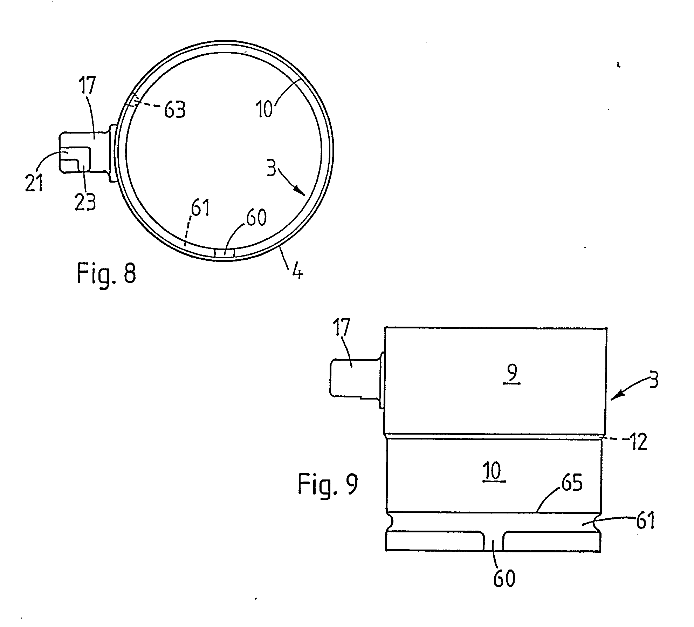

Anstelle das untere Ablaufrohr **4** mit dem elastischen Ring **15** kraftschlüssig klemmend zu halten, kann auch eine formschlüssige Verbindung verwendet werden. Hierzu wird anstelle der Nut **14** eine parallel zur Achse des Verbindungsstücks **3** an der Außenseite des unteren Teils verlaufende, in **Figur 9** dargestellte Nut **60**, welche in eine in Umfangsrichtung umlaufende Nut **61** einmündet verwendet. Die Nut **60** beginnt an der Unterkante des unteren Teils **10**. Das obere Ende des in den unteren Teil **10** einzuschiebenden Ablaufrohrs **4** trägt eine von seinem Rand distanzierte nockenartige Erhöhung **63**, welche in den Nuten **60** und **61** führbar ist.

Zur Montage wird ein einzuschiebendes Ablaufrohr **4** in den unteren Teil **10** eingeführt bis seine Erhöhung **63** am unteren Rand des unteren Teils **10** anstößt, dann gedreht bis sie in die Nut **60** greift, in der sie dann nach oben gleitet bis sie an der Oberkante **65** der Nut **61** anstößt. Anschließend wird um etwa um 90 ° verdreht. Das eingeschobene Ablaufrohr **4** ist jetzt mit im Rohrhalter **1** formschlüssig gehalten.

Anstelle, wie in **Figur 9** dargestellt, die Nut **61** annähernd horizontal verlaufen zu lassen, kann sie auch derart nach oben ansteigend ausgebildet werden, daß die Erhöhung **63** soweit in ihr gleitet bis sich der obere Rand des Ablaufrohrs **4** mit dem Absatz **12** verklemmt. Das Ablaufrohr **4** wäre dann zusätzlich zur formschlüssigen Verbindung noch kraftschlüssig gehalten.

Zur Erzeugung einer zusätzlichen kraftschlüssigen Verbindung könnte auch die Tiefe der Nut **61** mit zunehmenden Abstand von der Nut **60** abnehmen.

Anstelle die beiden Nuten **60** und **61** an dem unteren Teil **10** des Verbindungsstücks **3** anzubringen, können sie auch an einem Ende des Ablaufrohrs **4** und die Erhöhung **63** am unteren Teil **10** gegen außen angebracht werden. Da die Nuten nur an einem Ende des Ablaufrohrs **4** angebracht werden, kann die Länge der Ablaufrohre **4** durch Abschneiden des unbearbeiteten Ende eventuellen besonderen Gegebenheiten angepaßt werden.

Gegenüber der bekannten Ausführung eines Rohrhalters läßt sich der erfingungsgemäße Rohrhalter **1** preisgünstig aus einem Rohrstück durch mechanisches Verformen herstellen. Bei der Montage der Ablaufrohre **4** wird immer mit einem obersten an der Dachrinne anzuschließenden Ablaufrohr **4** begonnen und jedes weitere darunterliegend Ablaufrohr **4** angesetzt. Mit der erfindungsgemäßen, insbesondere formschlüssigen Verbindung mit der Erhöhung **63** und den beiden Nuten **60** und **61** läßt sich jeweils ein nach unten hängendes Ablaufrohr **4** in dem Rohrhalter **1** sicher halten und in aller Ruhe unterhalb dieses Ablaufrohrs **4** der nächste Rohrhalter **1** montieren. Zur Montage muß immer nur ein einziges Teil gehalten werden.

Aufgrund der oben beschriebenen Montage, bei der das Verbindungsstück **3** mit seiner Hülse **17** bei bereits in das Verbindungsstück **3** eingestecktem unteren und oberen Ablaufrohr **4** auf den Endteil **16** der in der Gebäudewand **2** eingeschraubten Befestigungsschraube **7** geschoben wird und anschließend zur Verriegelung der beiden Kupplungsteile der Stift **26** in den Schlitz **23** gedreht wird, ist ein festes Verlegen der Ablaufrohre **4** in vertikaler Richtung möglich, wobei hier nur eine geringe Toleranz aufgrund der Wärmeausdehnung des Rohrmaterials berücksichtigt werden muß. Jedes Rohr **4** in einem Ablaufrohrzug ist problemlos auswechselbar, da nur jeweils der untere Rohrhalter **1** weggenommen werden muß. Die Wegnahme erfolgt in umgekehrter Reihenfolge zur obigen Beschreibung, in dem der Stift **26** zurückgedreht wird bis er in den Schlitz **21** zu liegen kommt, wodurch das Verbindungsstück **3** von der Gebäudewand **2** wegziehbar ist, bis das betreffende Ablaufrohr **4** entnommen werden kann.

**Patentansprüche**

1. Rohrhalter **(1)** für Ablaufrohre **(4)** mit einem Verbindungsstück **(3)** zum Verbinden von zwei Ablaufrohren **(4)** und einem Befestigungsorgan **(7)** zum Befestigen des Verbindungsstücks **(3)** an einer Wand **(2)**, **dadurch gekennzeichnet,** daß das Verbindungsstück **(3)** aus einen Rohrstück besteht, in dessen oberen Teil **(9)** das untere Ende eines Ablaufrohrs **(4)** einsteckbar und über dessen unteren Teil **(10)** das obere Ende eines anderen Ablaufrohrs **(4)** steckbar ist.

2. Rohrhalter **(1)** nach Anspruch 1, **dadurch gekennzeichnet,** daß das Befestigungsorgan **(7)** und das Verbindungsstück **(3)** mit je einem Kupplungsteil **(16, 17)** zur lösbaren Verbindung versehen sind.

3. Rohrhalter **(1)** nach Anspruch 2, **dadurch gekennzeichnet,** daß die beiden Kupplungsteile **(16, 17)** einen Bajonettverschluß bilden.

4. Rohrhalter **(1)** nach einem der Ansprüche 1 bis 3, **dadurch gekennzeichnet,** daß der Querschnitt des Rohrstücks in seiner einen Hälfte **(9)** gegenüber seiner anderen Hälfte **(10)** derart aufgeweitet ist, daß zwischen den beiden Hälften **(9, 10)** ein Absatz **(12)** gebildet ist, welcher als Auflage für das von oben in das Verbindungsstück **(3)** eingesteckte Ablaufrohr **(4)** dient.

5. Rohrhalter **(1)** nach einem der Ansprüche 1 bis 4, **dadurch gekennzeichnet,** daß das Verbindungsstück **(3)** zum form- und/oder kraftschlüssigen Verbinden des unteren Ablaufrohrs **(4)** ausgebildet ist.

6. Rohrhalter **(1)** nach Anspruch 5, **dadurch gekennzeichnet,** daß das Verbindungsstück **(3)** eine von unten nach oben verlaufende Nut **(60)** hat, die nach unten offen ist und oben in eine wenigstens teilweise entlang des Umfangs des Verbindungsstücks **(3)** verlaufende Nut **(61)** übergeht, um ein Ablaufrohr **(4)**, das an seinem einen Ende eine den Nuten **(60, 61)** angepaßte nockenartige Erhöhung **(63)** hat, formschlüssig zu halten.

7. Rohrhalter **(1)** nach Anspruch 5, **dadurch gekennzeichnet,** daß das Verbindungsstück **(3)** zum Anklemmen des unteren Ablaufrohrs **(4)** an der Außenseite einen in einer Nut **(14)** liegenden elastischen Ring **(15)** aufweist.

8. Rohrhalter **(1)** nach Anspruch 1 bis 7, **dadurch gekennzeichnet,** daß das Befestigungsorgan **(7)** eine Markierung **(31)** trägt, bis zu der es in eine Wand **(2)** einzusetzen, insbesondere einzuschrauben ist.

9. Rohrhalter **(1)** nach Anspruch 3, **dadurch gekennzeichnet,** daß das Befestigungsorgan **(7)** stabförmig ist und an seinem einen Ende ein Schraubengewinde zur Befestigung in der Wand **(2)** und auf seiner Mantelfläche in der Nähe seines anderen Endes **(16)** eine Erhebung **(26)** hat, die einerseits in den fest am Verbindungsstück **(3)** angeordneten, hülsenförmigen Teil **(17)** des Bajonettverschlußes zwecks Verriegelung eingreift, und andererseits zur Drehmomentübertragung von einem Werkzeug **(35)** auf das Befestigungsorgan **(7)** beim Einschrauben desselben in die Wand **(2)** dient.

10. Ablaufrohr **(4)** zur Verwendung mit dem Rohrhalter **(1)** nach Anspruch 6, **gekennzeichnet durch** eine an seinem einen Ende nach innen vorstehende, den Nuten **(60, 61)** angepaßte nockenartige Erhöhung **(63)**.

11. Werkzeug **(35)** zur Montage des Rohrhalters **(1)** nach Anspruch 9, **gekennzeichnet durch** einen Schaft **(39)**, der am einen Ende einen Drehgriff **(37)** und am anderen Ende einen Kopf **(40)** trägt, der ein zum Schaft **(39)** koaxiales, dem anderen Ende **(16)** des Befestigungsorgans **(7)** angepaßtes Sackloch **(41)**, an einer Längsseite einen in das Sackloch **(41)** hineinführenden Schlitz **(44)**, dessen Schlitzbreite dem Durchmesser der als Stift **(26)** ausgebildeten Erhebung entspricht, und eine, vorzugsweise zum Sackloch **(41)** parallele Bohrung **(42)** aufweist, deren Innendurchmesser dem Durchmesser des Stiftes **(26)** angepaßt ist.

Fig. 1

Fig. 2

Fig. 4

Fig. 6

Fig. 7

Fig. 3

Fig. 5

Fig. 8

Fig. 9

<table>
<tr><td colspan="2"></td><td><strong>Europäisches<br>Patentamt</strong></td><td><strong>EUROPÄISCHER RECHERCHENBERICHT</strong></td><td><strong>Nummer der Anmeldung</strong><br><br>EP 89 81 0551</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D | GB-A- 704 684 (COLAMIN RAINWATER PRODUCTS LTD) <br> * Seite 2, Zeilen 9-62; Figuren 1-6 * | 1,4,5 | E 04 D 13/08 <br> F 16 L 3/12 |
| Y | | 2,6,7, 10 | |
| Y | GB-A- 541 283 (J. FAIRCLOUGH et al.) <br> * Seite 1, Zeile 67 - Seite 2, Zeile 11; Figuren 1-3 * <br> --- | 2 | |
| Y | GB-A- 708 142 (ROHRBAU MANNESMANN GmbH) <br> * Seite 2, Zeilen 54-60; Figuren 1-3 * <br> --- | 6 | |
| Y | FR-A-1 290 919 (B. CRABIERES et al.) <br> * Seite 1, Spalte 2, Zeile 28 - Seite 2, Spalte 1, Zeile 9; Figuren 1,2 * <br> --- | 6,10 | |
| Y | DE-A-3 442 180 (B. KESSEL) <br> * Seite 7, Absatz 3; Figur 3 * <br> --- | 7 | |
| A | DE-C- 168 029 (ALEXANDERWERK) <br> * Seite 2, Zeilen 9-16; Figuren 2,3 * <br> --- | 3 | **RECHERCHIERTE SACHGEBIETE (Int. Cl.5)** <br><br> E 04 D <br> F 16 L |
| A | GB-A- 29 988 (FORST)(A.D. 1912) <br> * Seite 2, Zeilen 4-18; Figur 3 * <br> ----- | 10 | |

Der vorliegende Recherchenbericht wurde für alle Patentansprüche erstellt

| Recherchenort | Abschlußdatum der Recherche | Prüfer |
|---|---|---|
| DEN HAAG | 12-10-1989 | KRIEKOUKIS S. |

EPO FORM 1503 03.82 (P0403)